# EUROPEAN PATENT APPLICATION

(11) **EP 4 454 948 A1**
(43) Date of publication of application: **30.10.2024**
(21) Application number: 22911104.2
(22) Date of filing: 16.12.2022
(51) Int. Cl.: B60Q 1/38, B60Q 1/34, B60Q 11/00

(54) **LIGHTING CIRCUIT**

(30) Priority: 22.12.2021 JP 2021208016
(71) Applicant: Koito Manufacturing Co., Ltd., Tokyo 108-8711 (JP)
(72) Inventor: KATO, Takayuki, Shizuoka-shi, Shizuoka 424-8764 (JP); UCHIYAMA, Yoshihiro, Shizuoka-shi, Shizuoka 424-8764 (JP)
(74) Representative: Zimmermann, Tankred Klaus
(86) International application number: PCT/JP2022/046343
(87) International publication number: WO 2023/120400

(57) **Abstract**

Provided is a lighting circuit capable of simultaneously turning off a plurality of light sources. A lighting circuit applied to a vehicle lamp including a plurality of light sources having a first light source connected to a power line and a second light source connected in series to the first light source and connected to a ground line, the lighting circuit including a first switch provided between the power line and the ground line, a second switch provided between a power-line-side node of the second light source and the ground line, and a control circuit that turns on or off each of the first and second light sources by controlling ON/OFF of each of a plurality of switches including the first and second switches.

## Description

### TECHNICAL FIELD

The present invention relates to a lighting circuit.

### BACKGROUND ART

There has been, for example, a lighting circuit of a vehicle lamp applied to a vehicle direction indicator lamp (hereinafter referred to as a "turn signal lamp") using a so-called sequential technique of sequentially turning on a plurality of light sources including light emitting elements and arranged side by side (see, for example, Patent Literatures 1 to 2).

### CITATION LIST

### PATENT LITERATURE

Patent Literature 1: Japanese Patent No. 6800581
Patent Literature 2: Japanese Patent No. 6687540

### SUMMARY OF INVENTION

### PROBLEMS TO BE SOLVED BY INVENTION

In general, when a plurality of light sources is connected in series and sequentially turned on, a switch (for example, transistor) is connected in parallel to each of the plurality of light sources, and ON/OFF of the corresponding light source is controlled by ON/OFF of each switch (see Fig. 3 of Patent Literature 1 and Figs. 9 and 10 of Patent Literature 2). In this case, for example, there is a possibility that the plurality of light sources cannot be simultaneously turned off (shift occurs in OFF timing) due to variations in characteristics and operation of each switch.

An object of the present invention is to provide a lighting circuit capable of simultaneously turning off a plurality of light sources.

### SOLUTION TO PROBLEMS

In order to solve the above-described problems, a main aspect of the present invention is directed to a lighting circuit applied to a vehicle lamp including a plurality of light sources having a first light source connected to a power line and a second light source connected in series to the first light source and connected to a ground line, which includes a first switch provided between the power line and the ground line, a second switch provided between a power-line-side node of the second light source and the ground line, and a control circuit that turns on or off each of the first and second light sources by controlling ON/OFF of each of a plurality of switches including the first and second switches.

### EFFECTS OF INVENTION

According to the present invention, the lighting circuit capable of simultaneously turning off the plurality of light sources can be provided.

### BRIEF DESCRIPTION OF DRAWINGS

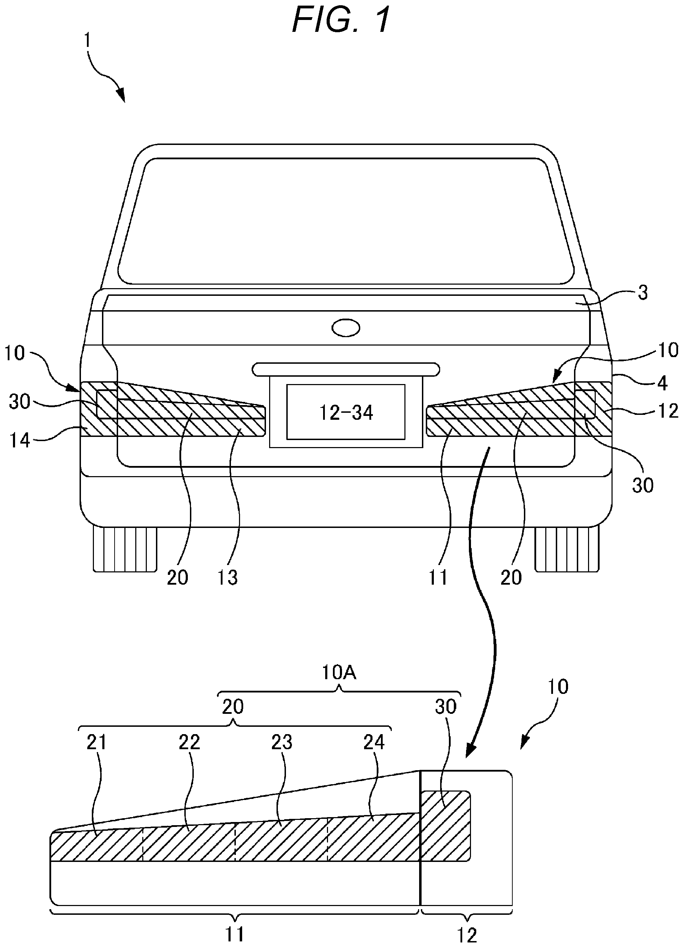

Fig. 1 is a view illustrating an example of a lighting unit 10 mounted on a vehicle 1;

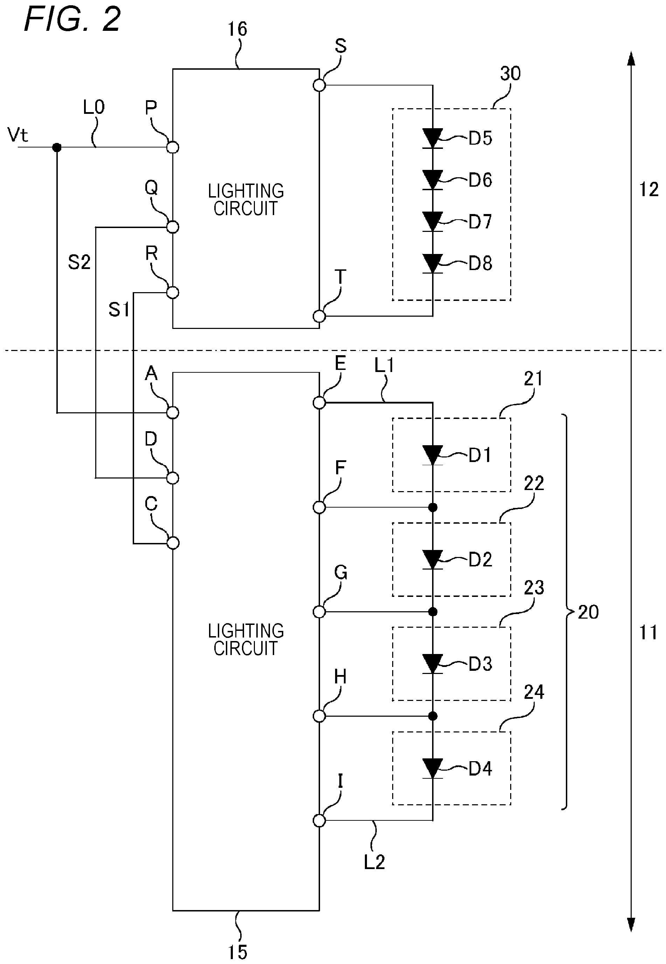

Fig. 2 is a schematic block diagram illustrating an example of a system configuration of a turn signal lamp 10A;

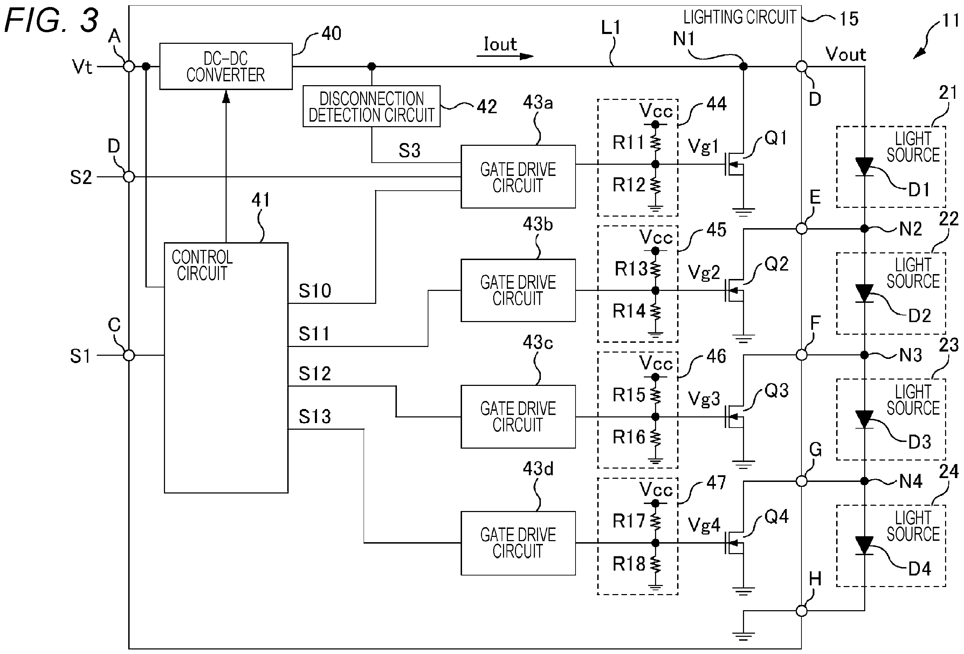

Fig. 3 is a schematic block diagram illustrating an example of a configuration of a movable unit 11;

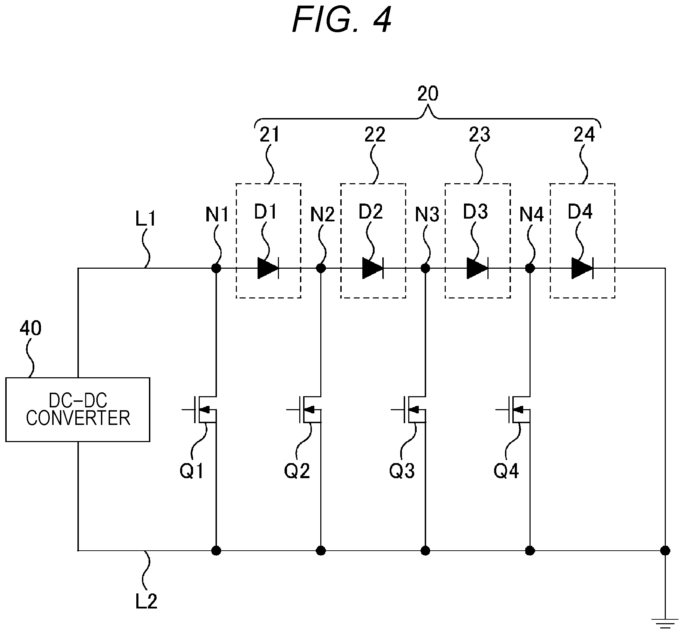

Fig. 4 is a diagram schematically illustrating a connection relationship between light sources 21 to 24 (light emitting elements D1 to D4) and NMOS transistors Q1 to Q4;

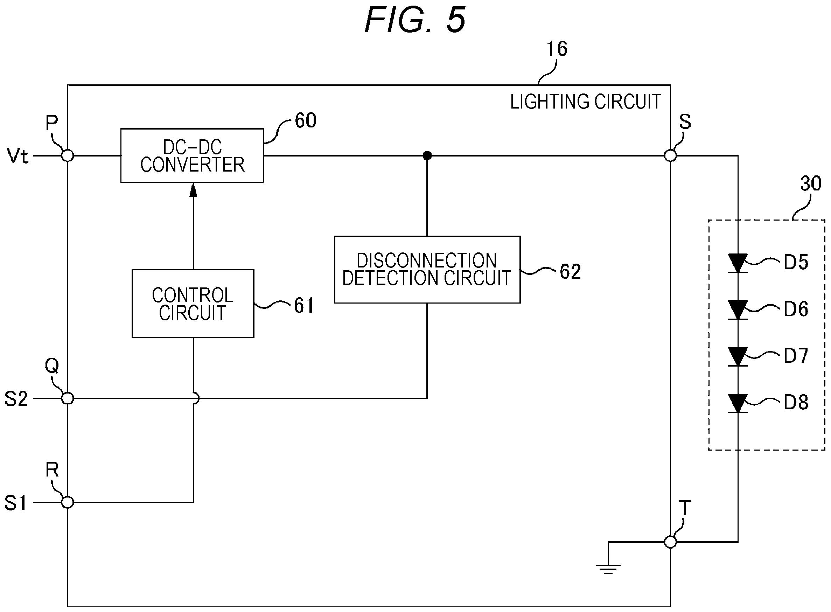

Fig. 5 is a schematic block diagram illustrating an example of a configuration of a lighting circuit 16; and

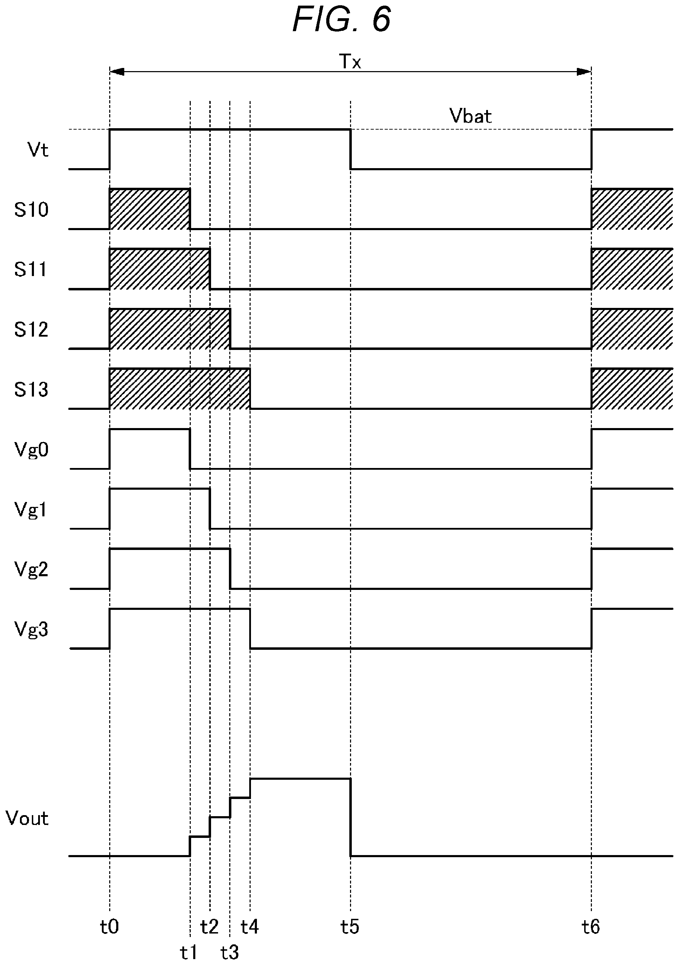

Fig. 6 is a time chart for describing operation of a lighting circuit 15.

### DESCRIPTION OF EMBODIMENTS

At least the following matters will be apparent from description of the present specification and illustration of the accompanying drawings.

### Embodiment

### «Configuration of Turn Signal Lamp 10A»

Fig. 1 is a view illustrating an example of a lighting unit 10 mounted on a vehicle 1. Moreover, Fig. 2 is a schematic block diagram illustrating an example of a system configuration of a turn signal lamp 10A.

A fixed portion 4 which is part of a vehicle body and a movable portion 3 (trunk door in the present embodiment) which can be opened and closed relative to the fixed portion 4 are provided at the rear of the vehicle body of the vehicle 1 illustrated in Fig. 1. Note that the movable portion 3 is an example of the trunk door, but the present invention is not limited thereto. For example, in the case of a hatchback type vehicle, a hatchback door is equivalent to the movable portion 3.

The lighting unit 10 is a vehicle lamp provided at the rear of the vehicle body of the vehicle 1, and includes movable units 11, 13 provided in the movable portion 3 and fixed units 12, 14 provided in the fixed portion 4. Moreover, as illustrated in Fig. 1, the lighting unit 10 is symmetric with respect to the center of the vehicle 1 in the width direction (left-right direction) thereof. Specifically, the movable unit 11 and the fixed unit 12 are provided on the right side of the vehicle 1, and the movable unit 13 and the fixed unit 14 are provided on the left side. The movable unit 11 and the movable unit 13 are provided symmetrical with respect to the center of the vehicle 1 in the width direction thereof, and the fixed unit 12 and the fixed unit 14 are provided symmetrical with respect to the center of the vehicle 1 in the width direction thereof. In the following description, a right portion (portion illustrated in an enlarged view) will be mainly described, but the same configuration is also applied to the left side.

The lighting unit 10 includes the turn signal lamp 10A. The turn signal lamp 10A is a vehicle direction indicator lamp hatched in the enlarged view of Fig. 1, and is arranged so as to extend over the fixed portion 4 and the movable portion 3 of the vehicle 1. Note that the lighting unit 10 includes a tail lamp, a brake lamp, etc. in addition to the turn signal lamp 10A.

As illustrated in Fig. 2, the turn signal lamp 10A includes lighting circuits 15, 16, a light source 20, and a light source 30.

The light source 20 is a light source including a light emitting element, and is provided in the movable portion 3. The light source 20 of the present embodiment is divided into four light sources (light sources 21 to 24), and is arranged side by side in a substantially horizontal direction (width direction of the vehicle 1) as illustrated in Fig. 1.

As illustrated in Fig. 2, the light sources 21 to 24 are connected in series between a terminal E and a terminal I of the lighting circuit 15 (in other words, between a power line L1 and a ground line L2). Further, a light emitting element is arranged in each light source. Specifically, a light emitting element D1 is arranged in the light source 21, a light emitting element D2 is arranged in the light source 22, a light emitting element D3 is arranged in the light source 23, and a light emitting element D4 is arranged in the light source 24. Since the light sources 21 to 24 are connected in series, the light emitting elements D1 to D4 are also connected in series.

Note that the configurations of the light sources 21 to 24 are not limited to those described above and each light source may include at least one light emitting element. For example, a plurality of light emitting elements may be connected in series to one light source. A plurality of light emitting elements may be connected in parallel to one light source. The number of light emitting elements, a light emitting element connection method, etc. may be different for each light source. The number of light sources included in the light source 20 is not limited to four, and may be at least two or more. For example, the number may be three or five or more. Note that in the present embodiment, the light source 21 is equivalent to a "first light source" and the light source 24 is equivalent to a "second light source." Further, for example, the light source 22 is equivalent to a "third light source."

The light source 30 is a light source which is turned on after the light source 20 has been turned on, and is provided in the fixed portion 4. In the light source 30, four light emitting elements (D5 to D8) are arranged in series, and are connected between a terminal S and a terminal T of the lighting circuit 16. The light source 30 is provided in parallel with the light source 20 of the movable portion 3. Note that the configuration of the light source 30 is not limited to that described above and may include at least one light emitting element. In the present embodiment, the light source 30 is equivalent to a "fourth light source."

The lighting circuit 15 is a circuit applied to a vehicle lamp (lighting unit 10 in the present embodiment) and configured to turn on each light emitting element of the light source 20, and is provided in the movable portion 3. The lighting circuit 16 is a circuit applied to the vehicle lamp and configured to turn on each light emitting element of the light source 30, and is provided in the fixed portion 4.

In the present embodiment, the lighting circuit 15 and the light source 20 are provided in the movable portion 3, but may be provided in the fixed portion 4. Similarly, the lighting circuit 16 and the light source 30 may be provided in the movable portion 3. That is, when the lighting circuit 16 and the light source 30 are provided in one of the movable portion 3 or the fixed portion 4, the lighting circuit 15 and the light source 20 are provided in the other one of the movable portion 3 or the fixed portion 4. Note that the configurations of the lighting circuits 15, 16 will be described later.

The lighting circuits 15, 16 of the present embodiment sequentially turn on the light source 20 and the light source 30 forming the turn signal lamp 10A based on an instruction from an electronic control unit (ECU) (not illustrated) on a vehicle side.

Further, a power line L0 is supplied to the lighting circuits 15, 16. A source voltage Vbat of a battery (not illustrated) for the vehicle is applied to the power line L0 based on the instruction from the ECU. The lighting circuits 15, 16 operate based on the voltage of the power line L0. Note that the power line L0 is a line for supplying power to circuits inside the lighting circuits 15, 16. Further, a line (ground line L2) for setting the internal circuit to a ground level is also supplied to the lighting circuits 15, 16.

For example, when a driver of the vehicle 1 operates a direction indicator (not illustrated) to turn on the turn signal lamp 10A of the lighting unit 10, the ECU applies the source voltage Vbat to the power line L0 at a predetermined period Tx (see Fig. 6). Hereinafter, the voltage applied to the power line L0 will be referred to as a turn voltage Vt. The turn voltage Vt is a voltage including a low-level (hereinafter referred to as an L-level) period in which the source voltage Vbat is not applied and a high-level (hereinafter referred to as an H-level) period in which the source voltage Vbat is applied.

Based on the level of the turn voltage Vt reaching the H-level, the lighting circuits 15, 16 turn on the light source 20 (light sources 21 to 24) and the light source 30 at different timings.

Note that as described later, the lighting circuit 15 transmits, to the lighting circuit 16, a signal S 1 indicating that the control of lighting of the light source 20 ends. When an abnormality (for example, disconnection) is detected in the light source 30 (any one of the light emitting elements D5 to D8), the lighting circuit 16 transmits a signal S2 (for example, L-level signal) indicating the abnormality to the lighting circuit 15. When the abnormality is not detected, a signal S2 (for example, H-level signal) indicating that the light source 30 is normally turned on is transmitted to the lighting circuit 15.

### «Configuration of Lighting Circuit 15»

Fig. 3 is a schematic block diagram illustrating an example of the configuration of the lighting circuit 15. Moreover, Fig. 4 is a diagram schematically illustrating a connection relationship between the light sources 21 to 24 (light emitting elements D1 to D4) and NMOS transistors Q1 to Q4. The lighting circuit 15 includes a DC-DC converter 40, a control circuit 41, a disconnection detection circuit 42, gate drive circuits 43a to 43d, voltage divider circuits 44 to 47, the NMOS transistors Q1 to Q4, and terminals A to H.

The DC-DC converter 40 is a converter for generating a drive current Iout based on the turn voltage Vt applied to the power line L0 and supplying the drive current Iout to the light emitting element of each light source of the light source 20 via an output-side power line L1. Note that as the DC-DC converter 40, a buck-boost converter is used.

As described above, the light sources 21 to 24 are connected in series between the power line L1 and the ground line L2. Thus, the drive current Iout supplied by the DC-DC converter 40 is constant (for example, 200 mA) regardless of the number of light sources to be turned on. On the other hand, an output voltage Vout changes according to the number of light sources to be turned on. The DC-DC converter 40 of the present embodiment is a buck-boost converter, and is capable of decreasing (bucking) the output voltage Vout to a voltage lower than the input voltage (source voltage Vbat) and increasing (boosting) the output voltage Vout to a voltage higher than the input voltage. In the present embodiment, the DC-DC converter 40 is equivalent to a "buck-boost converter." Since the configuration of the buck-boost converter is well known, the description thereof will be omitted.

The control circuit 41 is a circuit that turns on or off each of the light sources 21 to 24 by controlling operation of the DC-DC converter 40 and controlling ON/OFF of the NMOS transistors Q1 to Q4. The control circuit 41 includes a timer circuit (not illustrated) that generates timing to implement the sequential method. For example, the control circuit 41 includes a circuit (power synchronization timer) that controls timing (lighting start timing) to operate the DC-DC converter 40 and a circuit (sequential timer) that sequentially changes the levels of signals S10 to S13. Then, when the turn voltage Vt reaches the H-level, the control circuit 41 changes the levels of the signals S 10 to S13 at appropriate timings, thereby controlling ON/OFF of the NMOS transistors Q1 to Q4 (details will be described later). Moreover, the control circuit 41 outputs, to the lighting circuit 16 of the fixed portion 4, the signal S1 indicating that the control of lighting of the light source 20 ends.

Note that terminals for outputting the signals S10 to S13 from the control circuit 41 are open drain outputs, and when each of the light sources 21 to 24 is turned off, each signal is in a high impedance state. On the other hand, when each of the light sources 21 to 24 is turned on, each signal is at the L-level.

The disconnection detection circuit 42 is a circuit that detects the presence or absence of an abnormality of the light sources 21 to 24 (here, disconnection of the light emitting elements D1 to D4) based on the output voltage Vout. For example, the disconnection detection circuit 42 may include a voltage dividing resistor (not illustrated) that divides the output voltage Vout of the power line L1 and a comparator (not illustrated) that compares the divided voltage with a reference voltage. When disconnection occurs, the resistance becomes extremely high, and accordingly, the divided voltage also becomes high. Thus, the presence or absence of the disconnection can be detected by comparing the divided voltage with the reference voltage. When the disconnection is detected, the disconnection detection circuit 42 outputs, to the gate drive circuit 43a, a signal S3 (for example, L-level signal) indicating that there is an abnormality in the light source 20 (any of the light sources 21 to 24).

The gate drive circuit 43a is a circuit that controls a voltage to be applied to the gate of the NMOS transistor Q1 based on the signal S2, the signal S3, and the signal S10 (in other words, controls ON/OFF of the NMOS transistor Q1), and includes, for example, a logic circuit that performs logical operation for each signal. As described later, when any of the signal S3 indicating that there is an abnormality in the light source 20 (disconnection of the light emitting elements D1 to D4 in the present embodiment) and the signal S2 indicating that there is an abnormality in the light source 30 (disconnection of the light emitting elements D5 to D8) is input, the gate drive circuit 43a sets the output to a high impedance and forcibly turns on the NMOS transistor Q1 regardless of the signal S10. Note that the gate drive circuit 43a is equivalent to a "drive circuit."

The gate drive circuit 43b controls a voltage to be applied to the gate of the NMOS transistor Q2 based on the signal S11. Similarly, the gate drive circuit 43c controls a voltage to be applied to the gate of the NMOS transistor Q3 based on the signal S12, and the gate drive circuit 43d controls a voltage to be applied to the gate of the NMOS transistor Q4 based on the signal S13.

Each of the voltage divider circuits 44 to 47 is a circuit for turning on each of the NMOS transistors Q1 to Q4 when each of the signals S10 to S13 is in the high impedance state. The voltage divider circuits 44 to 47 generate divided voltages to turn on the NMOS transistors Q1 to Q4 during a period in which the source voltage Vbat is applied as the turn voltage Vt.

Specifically, the voltage divider circuit 44 includes resistors R11, R12, the voltage divider circuit 45 includes resistors R13, R14, the voltage divider circuit 46 includes resistors R15, R16, and the voltage divider circuit 47 includes resistors R17, R18. Each of the resistors R11, R12, the resistors R13, R14, the resistors R15, R16, and the resistors R17, R18 divides a voltage Vcc (for example, 10 V) generated based on the source voltage Vbat in the period in which the source voltage Vbat (for example, 12 V) is applied as the turn voltage Vt. At this time, the resistance value of each resistor (resistors R11 to R18) is set so as to generate a divided voltage for turning on each of the NMOS transistors Q1 to Q4.

The NMOS transistors Q1 to Q4 have a switch function of being turned on or off according to a voltage applied to the gate. In the present embodiment, the NMOS transistors Q1 to Q4 are elements that control ON/OFF of each of the light sources 21 to 24. Further, the NMOS transistor Q1 of the present embodiment also has a function of turning off all the light sources 21 to 24.

The NMOS transistor Q1 is provided between a node N1 of the power line L1 between the DC-DC converter 40 and the light emitting element D1, and the ground line L2. The NMOS transistor Q2 is provided between a node N2 of the power line L1 between the light emitting element D1 and the light emitting element D2, and the ground line L2. The NMOS transistor Q3 is provided between a node N3 of the power line L1 between the light emitting element D2 and the light emitting element D3, and the ground line. The NMOS transistor Q4 is provided between a node N4 of the power line L1 between the light emitting element D3 and the light emitting element D4, and the ground line L2.

Note that the NMOS transistor Q1 is equivalent to a "first switch" and the NMOS transistor Q4 is equivalent to a "second switch." Further, for example, the NMOS transistor Q2 is equivalent to a "third switch." In addition, the node N4 is equivalent to a "power-line-side node of the second light source" and the node N2 is equivalent to a "ground-side node of the first light source."

### «Configuration of Lighting Circuit 16»

Fig. 5 is a schematic block diagram illustrating an example of the configuration of the lighting circuit 16. The lighting circuit 16 includes a DC-DC converter 60, a control circuit 61, a disconnection detection circuit 62, and terminals P to T.

The DC-DC converter 60 is a converter that supplies a drive current to the light emitting elements D5 to D8 of the light source 30 based on the turn voltage Vt applied to the power line L0. Note that the DC-DC converter 60 may be a boost converter or a buck converter.

The control circuit 61 is a circuit that controls operation of the DC-DC converter 60. When receiving the signal S1 from the lighting circuit 51 of the movable portion 3, the control circuit 61 operates the DC-DC converter 60.

The disconnection detection circuit 62 is a circuit similar to the disconnection detection circuit 42, and detects the presence or absence of an abnormality of the light source 30 (disconnection of the light emitting elements D5 to D6) based on the output voltage of the DC-DC converter 60. When the output voltage of the DC-DC converter 60 becomes higher than a predetermined level, it is detected that any of the light emitting elements D5 to D8 is disconnected. This detection result is transmitted to the lighting circuit 15 as the signal S2 indicating that there is an abnormality in the light source 30.

### <<Operation of Lighting Circuit 15»

Fig. 6 is a time chart for describing operation of the lighting circuit 15. Note that hatched portions in the signals S10 to S 13 indicate a high impedance.

For example, when the direction indicator (not illustrated) for blinking the turn signal lamp is operated, the turn voltage Vt changing between 0 V and the source voltage Vbat in the predetermined period Tx (for example, 700 ms) is generated and applied to the power line L0.

Note that in the period Tx, each of the period in which the turn voltage Vt is 0 V and the period of the source voltage Vbat is a half period (350 ms) of the period Tx. Accordingly, the source voltage Vbat is applied to the power line L0 for the half period of the period Tx. Since the DC-DC converter 40 supplies the constant drive current Iout to the light sources 21 to 24, the output voltage Vout is drawn to increase in a stepwise manner as the light sources 21 to 24 are sequentially turned on.

First, at a time point t0, the turn voltage Vt reaches the H-level (source voltage Vbat). Accordingly, the DC-DC converter 40 of the lighting circuit 15 is activated, and the drive current Iout can be supplied to the light source 20.

When the turn voltage Vt reaches the H-level, the control circuit 41 of the lighting circuit 15 sets the signals S10 to S 13 to the high impedance state, and then, starts sequential lighting operation. Note that when the signal S 10 is at the high impedance, the output of the gate drive circuit 43a is also at the high impedance. Similarly, when the signals S1 1 to S13 are at the high impedance, the outputs of the gate drive circuits 43b to 43d are also at the high impedance. At this time, since each of the voltage divider circuits 44 to 47 generates the divided voltage to turn on each of the NMOS transistors Q1 to Q4, each of voltages Vg1 to Vg4 reaches a voltage (H-level) to turn on each of the NMOS transistors Q1 to Q4. Accordingly, the NMOS transistors Q1 to Q4 are turned on, and the light sources 21 to 24 are turned off.

Thereafter, at a time point t1, the control circuit 41 sets the output of the signal S10 to the L-level. Accordingly, the output of the gate drive circuit 43a reaches the L-level, and the divided voltage of the voltage divider circuit 44 and the voltage Vg1 also reach the L-level. Thus, the NMOS transistor Q1 is turned off, and the light source 21 is turned on. At this time, the NMOS transistors Q2 to Q4 are ON, and the light sources 22 to 24 remain OFF.

At a time point t2 after a lapse of predetermined time from the time point t1, the control circuit 41 sets the output of the signal S11 to the L-level. Accordingly, the output of the gate drive circuit 43b reaches the L-level, and the divided voltage of the voltage divider circuit 45 and the voltage Vg2 reach the L-level. Thus, the NMOS transistor Q2 is turned off, and the light source 22 is turned on. Note that in the present embodiment, until the light source 22 is turned on, the DC-DC converter 40 bucks the turn voltage Vt (source voltage Vbat) and outputs the output voltage Vout according to the light sources 21, 22.

At a time point t3 after a lapse of predetermined time from the time point t2, the control circuit 41 sets the output of the signal S12 to the L-level. Accordingly, the output of the gate drive circuit 43c reaches the L-level, and the divided voltage of the voltage divider circuit 46 and the voltage Vg3 reach the L-level. Thus, the NMOS transistor Q3 is turned off, and the light source 23 is turned on. At this time, the DC-DC converter 40 boosts the turn voltage Vt (source voltage Vbat) and outputs the output voltage Vout according to the light sources 21 to 23.

At a time point t4 after a lapse of predetermined time from the time point t3, the control circuit 41 sets the output of the signal S13 to the L-level. Accordingly, the output of the gate drive circuit 43d reaches the L-level, and the divided voltage of the voltage divider circuit 46 and the voltage Vg4 reach the L-level. Thus, the NMOS transistor Q4 is turned off, and the light source 24 is turned on.

Note that although not illustrated in the figure, the control circuit 41 sets the output of the signal S13 to the L-level, and then, outputs the signal S1 indicating that the control of lighting of the light source 20 ends to the lighting circuit 16. When receiving the signal S1, the control circuit 61 of the lighting circuit 16 operates the DC-DC converter 60 to supply the drive current to the light source 30 at a time point after a lapse of predetermined time from the time point t4. Accordingly, all the light source 20 (light sources 21 to 24) and the light source 30 are turned on.

Then, at a time point t5, the turn voltage Vt reaches the L-level (0 V), and the outputs of the DC-DC converters 40, 60 also reach 0 V Accordingly, all the light source 20 (light sources 21 to 22) and the light source 30 are turned off. Then, when the turn voltage Vt reaches the H-level at a time point t6, the same operation as that after the time point t0 is repeated.

Note that when from the time point t1 to the time point t4, the disconnection detection circuit 42 detects that a certain light emitting element of the light sources 21 to 24 has been disconnected, the disconnection detection circuit 42 outputs the signal S3 indicating an abnormality to the gate drive circuit 43a. When receiving the signal S3 indicating the abnormality, the gate drive circuit 43a outputs the high impedance regardless of the level of the signal S10. Accordingly, the divided voltage of the voltage divider circuit 44 is applied to the gate of the NMOS transistor Q1, and the NMOS transistor Q1 is turned on. Thus, the drive current Iout no longer flows to each light source (light sources 21 to 24) of the light source 20, and each light source of the light source 20 is simultaneously turned off.

When the signal S2 indicating an abnormality of the light source 30 is received from the lighting circuit 16, the gate drive circuit 43a also output the high impedance regardless of the signal S10. Also in this case, when the NMOS transistor Q1 is turned on, the light sources of the light source 20 are simultaneously turned off.

As described above, in the present embodiment, it is possible to simultaneously turn off all the light sources (light sources 21 to 24) of the light source 20 only by turning on the NMOS transistor Q1, and there is no difference in OFF timing as compared to a case where the light sources 21 to 24 are individually turned off.

Note that when the DC-DC converter 40 is the boost converter, the voltage cannot be bucked, and thus, a potential on the most downstream side of the path of the drive current Iout in the light source 20 (here, the cathode side of the light emitting element D4 of the light source 24) is applied to the positive-side input of the DC-DC converter 40. In this manner, even when the number of light sources to be turned on is small, the DC-DC converter 40 can boost the voltage based on the potential on the cathode side of the light emitting element D4 and output an appropriate output voltage Vout. However, in this case, since the potential on the cathode side of the light emitting element D4 of the light source 24 is not a ground potential, it is difficult to design the lighting circuit so as to control ON/OFF of the light sources 21 to 24.

For example, when an NMOS transistor is provided in parallel to each light source, a threshold voltage for turning on such an NMOS transistor increases. In particular, when NMOS transistors are provided in parallel to a plurality of light sources connected in series, it is difficult to perform control because a threshold voltage for each NMOS transistor varies. For this reason, a PMOS transistor is used as a transistor connected in parallel to a light source. However, in the PMOS transistor, the number of circuit components that performs control is great, and it is difficult to design a circuit as compared to the NMO transistor.

On the other hand, in the present embodiment, since the DC-DC converter 40 is the buck-boost converter, the potential on the most downstream side of the current path in the light source 20 (here, the cathode side of the light emitting element D4 of the light source 24) can be set to the ground potential. Accordingly, the NMOS transistors Q1 to Q4 can be used as transistors that turn on or off the light sources (light sources 21 to 24). In the present embodiment, the sources of the NMOS transistors Q1 to Q4 are grounded, and are not connected in parallel to the light sources 21 to 24. Thus, in the present embodiment, the NMOS transistors Q1 to Q4 can be controlled to be turned on or off at the same voltage, and the lighting circuit 15 can be easily designed. Further, as described above, the light sources 21 to 24 can be simultaneously turned off only by turning on the NMOS transistor Q1 on the most upstream side of the path of the drive current Iout. Thus, in the lighting circuit 15, the circuit for simultaneously turning off the light sources 21 to 24 can be easily designed.

### Modifications

In the above-described embodiment, the light sources 21 to 24 are sequentially turned on, but the present invention is not limited thereto. For example, the NMOS transistors Q4, Q3, Q2, Q1 may be turned on in this order from a state in which all the light sources 21 to 24 are turned on by turning off all the NMOS transistors. In this case, the light sources 21 to 24 are sequentially turned off from the state in which all the light sources are turned on.

The DC-DC converter 40 of the above-described embodiment is the buck-boost converter, but the present invention is not limited thereto. For example, a boost converter and a buck converter may be combined. In this case, a voltage obtained by boosting the turn voltage Vt by the boost converter can be bucked by the buck converter, and an appropriate output voltage Vout can be applied to the light source 20.

In the above-described embodiment, the plurality of light sources is arranged so as to extend over the movable portion 3 and fixed portion 4 of the vehicle 1, but the present invention is not limited thereto. For example, a plurality of light sources (and lighting circuits) may be arranged in one of the movable portion 3 or the fixed portion 4, and may be sequentially turned on.

### Summary

The lighting circuit 15 of the present embodiment has been described above. The lighting circuit 15 is the lighting circuit applied to the lighting unit 10 including the light source 20 having the light source 21 connected to the power line L1 and the light source 24 connected in series to the light source 21 and connected to the ground line L2, which includes the NMOS transistor Q1 provided between the power line L1 and the ground line L2, the NMOS transistor Q4 provided between the power-line-L1-side node N4 of the light source 24 and the ground line L2, and the control circuit 41 that turns on or off each of the light source 21 and the light source 24 by controlling ON/OFF of each of the plurality of NMOS transistors including the NMOS transistors Q1, Q4. With this configuration, all the light sources (light sources 21 to 24) can be simultaneously turned off by turning on the NMOS transistor Q1.

The lighting circuit 15 further includes the NMOS transistor Q2 provided between the ground-side node N2 of the light source 21 and the ground line L2. The light source 20 includes the light source 22 provided between the node N2 and the light source 24, the plurality of NMOS transistors includes the NMOS transistors Q1, Q2, Q4, and the control circuit 41 turns on or off each of the light sources 21, 22, 24 by controlling ON/OFF of each of the NMOS transistors Q1, Q2, Q4. With this configuration, even when there are three or more light sources, it is possible to control ON/OFF of each light source and simultaneously turn off all the light sources.

The control circuit 41 controls ON/OFF of the NMOS transistors Q2 to Q4 after having turned off the NMOS transistor Q1 such that the light sources 21 to 24 included in the light source 20 are sequentially turned on. With this configuration, the light sources 21 to 24 can be sequentially turned on.

The control circuit 41 turns on the NMOS transistor Q1 after having controlled ON/OFF of each of the plurality of NMOS transistors such that the light sources 21 to 24 having being turned on are sequentially turned off. With this configuration, it is possible to sequentially turn off the light sources 21 to 24 from the state in which all the light sources 21 to 24 are turned on.

The DC-DC converter 40 that supplies the drive current Iout to the light sources 21 to 24 is the buck-boost converter, and the switches for turning on or off the light sources 21 to 24 are the NMOS transistors Q1 to Q4. Since the DC-DC converter 40 can boost or buck the voltage, an appropriate output voltage Vout can be output according to the number of light sources to be turned on. In addition, since the NMOS transistors Q1 to Q4 are used as the switches, a circuit configuration is simplified as compared to a case of using the PMOS transistor.

The lighting circuit 15 further includes the gate drive circuit 43a that turns on the NMOS transistor Q1 based on the signal S3 indicating that there is an abnormality in any of the light sources 21 to 24. With this configuration, when an abnormality occurs in any of the light sources 21 to 24, all the light sources can be turned off simultaneously.

The gate drive circuit 43 turns on the NMOS transistor Q1 based on the signal S2 indicating that there is an abnormality in the light source 30 provided in the fixed portion 4 of the vehicle 1, and the light sources 21 to 24 are provided in the movable portion 3 which can be opened and closed relative to the fixed portion 4. With this configuration, when there is an abnormality in the light source 30 of the fixed portion 4, all the light sources of the movable portion 3 can be turned off simultaneously.

The above-described embodiments are for the sake of easy understanding of the present invention, and are not intended to limit the present invention. In addition, the present invention can be changed or modified without departing from the gist thereof, and the present invention includes equivalents thereof, needless to say.

The present international application claims priority based on Japanese Patent Application No. 2021-208016 filed on December 22, 2021, and the entire contents of Japanese Patent Application No. 2021-208016 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

1 Vehicle
3 Movable Portion
4 Fixed Portion
10 Lighting Unit
10A Turn Signal Lamp
11, 13 Movable Unit
12, 14 Fixed Unit
15, 16 Lighting Circuit
20 Light Source
21 to 24 Light Source
30 Light Source
40, 60 DC-DC Converter
41, 61 Control Circuit
42, 62 Disconnection Detection Circuit
43a to 43d Gate Drive Circuit
D1 to D8 Light Emitting Element
Q1 to Q4 NMOS Transistor
R11 to R18 Resistor
Vt Turn Voltage
L0, L1 Power Line
L2 Ground Line

## Claims

1. A lighting circuit applied to a vehicle lamp including a plurality of light sources having a first light source connected to a power line and a second light source connected in series to the first light source and connected to a ground line, the lighting circuit comprising:
a first switch provided between the power line and the ground line;
a second switch provided between a power-line-side node of the second light source and the ground line; and
a control circuit that turns on or off each of the first and second light sources by controlling ON/OFF of each of a plurality of switches including the first and second switches.

2. The lighting circuit according to claim 1, further comprising:
a third switch provided between a ground-side node of the first light source and the ground line,
wherein the plurality of light sources includes a third light source provided between the ground-side node of the first light source and the second light source,
the plurality of switches includes the first to third switches, and
the control circuit turns on or off each of the first to third light sources by controlling ON/OFF of each of the plurality of switches.

3. The lighting circuit according to claim 1 or 2, wherein
the control circuit controls ON/OFF of a switch different from the first switch among the plurality of switches after having turned off the first switch such that the plurality of light sources is sequentially turned on.

4. The lighting circuit according to claim 1 or 2, wherein
the control circuit turns on the first switch after having controlled ON/OFF of each of the plurality of switches such that the plurality of light sources having being turned on is sequentially turned off.

5. The lighting circuit according to claim 1 or 2, further comprising:
a buck-boost converter that supplies a drive current to the plurality of light sources,
wherein each of the plurality of switches is an NMOS transistor.

6. The lighting circuit according to claim 1 or 2, further comprising:
a drive circuit that turns on the first switch based on a signal indicating that there is an abnormality in any of the plurality of light sources.

7. The lighting circuit according to claim 6, wherein
the drive circuit
turns on the first switch based on a signal indicating that there is an abnormality in a fourth light source provided in one of a fixed portion of a vehicle or a movable portion which can be opened or closed relative to the fixed portion, and
the plurality of light sources is provided in the other one of the fixed portion or the movable portion.
